Europäisches Patentamt

European Patent Office

Office européen des brevets

(19)

(11) Publication number: **0 057 920**

A1

(12) # EUROPEAN PATENT APPLICATION

(21) Application number: **82100831.5**

(22) Date of filing: **05.02.82**

(51) Int. Cl.³: **F 16 L 33/20**

(30) Priority: **06.02.81 US 232446**

(43) Date of publication of application:
**18.08.82 Bulletin 82/33**

(84) Designated Contracting States:
**DE FR GB IT**

(71) Applicant: **EATON CORPORATION**
**100 Erieview Plaza**
**Cleveland Ohio 44114(US)**

(72) Inventor: **Myles, Edward Davis**
**10678 Freedom St.**
**Garrettsville Ohio 44231(US)**

(74) Representative: **Wagner, Karl H.**
**P.O. Box 246 Gewürzmühlstrasse 5**
**D-8000 Munich 22(DE)**

(54) Hose and tube fitting.

(57) Disclosed is a permanently attachable fitting adapted to be secured to the end of hose or tubing for the conveyance of fluids by compressing the hose or tubing wall within an annular space provided between a shell and nipple of the fitting by a process, such as swaging, that both contracts the shell radially inwardly against the hose or tubing wall and exerts a longitudinal compressible force upon the shell. The shell wall has one or more annular bridges provided by annular grooves that are caused to buckle during the contraction process so as to reduce the elongation of the shell and reduce the relative longitudinal movement between the shell and the nipple and thereby improve the integrity of the hose or tubing wall within the fitting by reducing the amount of stretch and shear stresses imposed thereupon.

FIG. 1

FIG. 2

- 1 -

## HOSE AND TUBE FITTING

### INTRODUCTION

This invention relates generally to a permanently attachable fitting for use in coupling hose or tubing to a source of fluid and more particularly to a permanently attachable fitting having a shell member that is contracted inwardly to compressibly secure the fitting to the end of a hose or tube and is adapted to reduce the elongation of the shell arising from the contraction process so as to reduce longitudinal shear stresses and stretching imposed upon the wall of the hose or tubing within the fitting.

### BACKGROUND OF THE INVENTION

Permanently attachable fittings of various designs have been used for many years to couple hoses and tubes to a source of fluid. Generally such fittings are secured to the end of a hose or tube by compressing the wall thereof between a generally tubular shaped nipple that extends from one end of the fitting for insertion into the bore of the hose and a shell member that extends from the fitting coaxially about the nipple and is spaced apart from the nipple to provide an annular cavity therebetween for receiving the wall of the hose or tube.

The compression of the hose or tube wall is commonly accomplished either by contracting the fitting shell inwardly against the hose or tube by pressing the fitting longitudinally through a tapered die in what is known in the trade as a "swaging" operation or to use a segmented die that is caused to contract radially inwardly against the shell in what is known in the trade as a "crimping" operation. Generally, since the volume of material from which the shell is made remains substantially unchanged when the shell is contracted from a larger diameter to a smaller diameter, the shell is necessarily caused to elongate to accommodate for such contraction. Although the process of swaging is particularly prone to cause shell elongation in conjunction with imposing longitudinal compressive forces upon the shell as hereinafter described, other means for contracting the shell may likewise cause the shell to elongate and therefore the term "contracting" as used herein means contracting by swaging or by any other means that causes the shell to elongate in conjunction with imposing a longitudinal compressive force upon the shell during the contraction process that is sufficient to reduce the elongation of the shell as a result of the shell having been adapted in the manner hereinafter described.

Generally, since the fitting nipple is not subjected to the degree of contraction to which the fitting shell is subjected, a relative longitudinal movement arises between the shell and the nipple during the contraction process which, because of the compressed engagement of the wall of the hose or tube therebetween, causes the hose or tube wall to stretch and imposes undesirable longitudinal shear stresses thereupon within the fitting. Dependent upon the material or materials from which the hose or tube is made, such stretch and shearing stress may cause a fracture in at least a portion of the hose or tube wall within the fitting.

Whereas permanently attachable fittings secured by a contracting process that causes the shell thereof to elongate have in the past been susceptable to imposing such longitudinal shear stress and stretch upon the hose or tube wall within the respective fittings, the fitting of the present invention provides means associated with the shell thereof to reduce the amount of elongation that would normally be expected to occur as a result of the contraction thereof and by reducing such elongation to reduce the longitudinal shear stresses imposed upon the hose or tube wall as well as the stretch thereof within the fitting. The reduction in shell elongation is particularly advantageous where one or more of the materials from which the hose or tube is made are particularly susceptable to breakage or undue stress under such stretching conditions.

In addition to the previously described characteristics of longitudinal shear stress and stretch occurring to the hose or core tube wall associated with elongation of the shell of permanently attachable fittings in the past, certain of such fittings have commonly employed various means of increasing the gripping engagement of either or both the fitting shell and nipple to the hose or tube particularly where high fluid pressures are involved. An example of a permanently attachable fitting cup (shell) having internal threads to enhance the gripping engagement between the cup and the outer surface of a hose is disclosed in United States Patent 2,273,398. An example of serrations on the outer surface of a permanently attachable fitting nipple as well as holes through the sleeve (shell) for respectively improving the grip of the nipple to the inner surface of the hose core tube bore and the sleeve to the outer surface of the hose is disclosed in United States Patent 2,976,293. The fitting of the present invention is advantageously able to utilize such means as grooves, barbs, serrations and the like on either or both the inner surface of the shell and the outer surface of the nipple thereof where it is desired to enhance the compressed gripping engagement of the fitting to the hose or tubing as well as provide for a reduction in the longitudinal stretch of the hose or core tube wall in the manner hereinafter described.

SUMMARY OF THE INVENTION

Accordingly, it is an object of this invention to provide a permanently attachable fitting adapted for compressible securement to the end of hose or tubing for the conveyance of fluids therethrough that is adapted to improve the integrity of the hose or tubing wall within the fitting.

It is another object of this invention to provide a permanently attachable fitting adapted for compressible securement to the end of hose or tubing for the conveyance of fluids therethrough that is adapted to reduce the amount of longitudinal shear stress and stretching imposed upon the hose or tubing wall within the fitting arising from contraction associated with the securement process.

It is a feature of this invention to provide a permanently attachable fitting having a nipple extending from one end thereof for insertion into the bore of hose or tubing to which the fitting is to be compressibly secured for the conveyance of fluids therethrough and having a shell extending coaxially about the nipple and spaced apart therefrom to provide an annular cavity therebetween adapted to receive the hose or tubing wall of which the shell is adapted, upon the contraction thereof towards the nipple by a process that imposes a longitudinal compressive force upon the shell, to reduce the elongation of the shell in such a manner as to reduce the relative longitudinal movement between the shell and the nipple so as to reduce the amount of longitudinal shear stress as well as stretch imposed upon the wall of the hose or tubing within the fitting.

## BRIEF DESCRIPTION OF THE DRAWINGS

FIGURE 1 shows a partial central longitudinal section of a hose and a full central longitudinal section of an embodiment of the fitting of the invention prior to securement of the fitting to the hose;

FIGURE 2 shows a central longitudinal section of the hose and fitting embodiment of FIGURE 1 assembled together with the fitting compressibly secured to the hose;

FIGURE 3 shows an expanded partial longitudinal cross-sectional view of the shell of the fitting embodiment of FIGURES 1 and 2;

FIGURE 4 shows a transverse longitudinal section through embodiments 4A, 4B and 4C of a shell used in conjunction with the fitting of the invention;

FIGURE 5 shows a transverse longitudinal section through embodiments 5A and 5B of a nipple used in conjunction with the fitting of the invention; and

FIGURE 6 shows a central longitudinal cross-sectional view of a die through which the hose and fitting embodiment of FIGURES 1 and 2 has been partially pressed during the process of securing the fitting to the hose.

DETAILED DESCRIPTION OF PREFERRED EMBODIMENTS

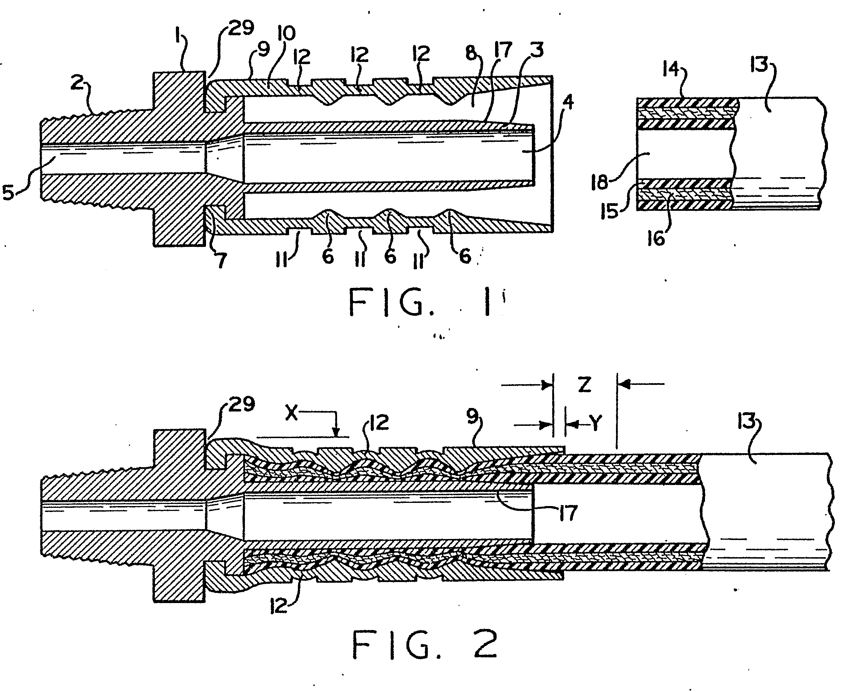

FIGURE 1 shows an embodiment of the permanently attachable fitting 29 of the invention prior to its securement to the end of hose 13 having bore 18 extending therethrough. Fitting 29 has a means for connecting body member 1 to a source of fluid in the form of threaded male pipe end 2 extending from one end thereof and a substantially tubular shaped nipple 17 extending from the opposite end thereof. Nipple 17 has a wall 3 that encloses bore 4 therethrough. Bore 4 is in fluid communicating relationship with bore 5 disposed through body member 1 and end 5. Bores 4 and 5 are adapted to provide a fluid communicating relationship between the source of fluid and bore 18. Shell 9 extends away from body member 1 coaxially about nipple 17 and has a wall 10 thereof having its inner surface spaced apart from nipple 17 to provide an annular cavity 8 therebetween that is adapted to receive the wall of hose 13. Hose 13 has an annular wall comprising inner tubular core tube 15 enclosed by outer protective jacket 14 with reinforcement layer 16 disposed therebetween.

The hose or tubing secured to the fitting of the invention may be made of any materials having properties suitable for a particular application. Core tube 15 and/or jacket 14 of hose 13 for example may be made from a cured rubber or suitably cross-linked or non-crosslinked elastomeric or plastic material or tubing used in conjunction with the fitting of the invention may for example be made from plastic or metallic materials. Reinforcement 16 for example may comprise one or more layers of metallic wire or fibrous filaments or combinations of both to provide hose 13 with the amount of strength desired for a particular application. Wall 10 of shell 9 has disruptions on the inner surface thereof in the form of three spaced apart annular protuberances 6 in the form of ridges that extend away from wall 10 towards nipple 17 and have a generally triangular shaped cross-section with the base thereof integral with wall 10. Protuberances 6 enhance the compressed engagement between shell 9 and hose 13 when shell 9 is contracted inwardly towards nipple 17 to secure fitting 29 to hose 13. Shell 9 is secured to body member 1 by pressing the end of shell 9 closest to body member 1 into annular groove 7 disposed on the side of body member 1 facing nipple 17.

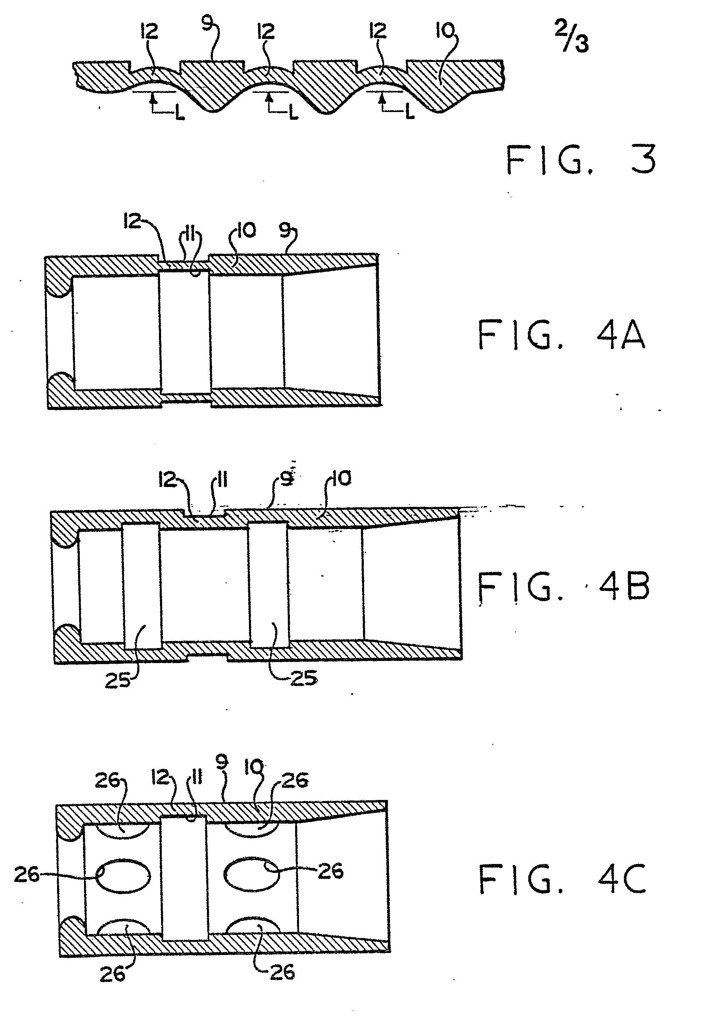

Three spaced apart annular grooves 11 are disposed in the outer surface of wall 10 of shell 9 so as to provide annular bridges 12 in wall 10 of shell 9 that bridge across each respective groove 11 that are thinner in thickness than the thickness of wall 10 adjacent to each bridge 12 yet provide sufficient strength for the particular application in which fitting 29 is to be used. As hereinafter more fully described with respect to FIGURES 2 and 3, bridges 12 are adapted by means of the width, depth and cross-sectional shape of each groove 11 to buckle outwardly away from nipple 17 when shell 9 is contracted towards nipple 17 so as to reduce the amount of elongation that would normally occur in the absence of grooves 11.

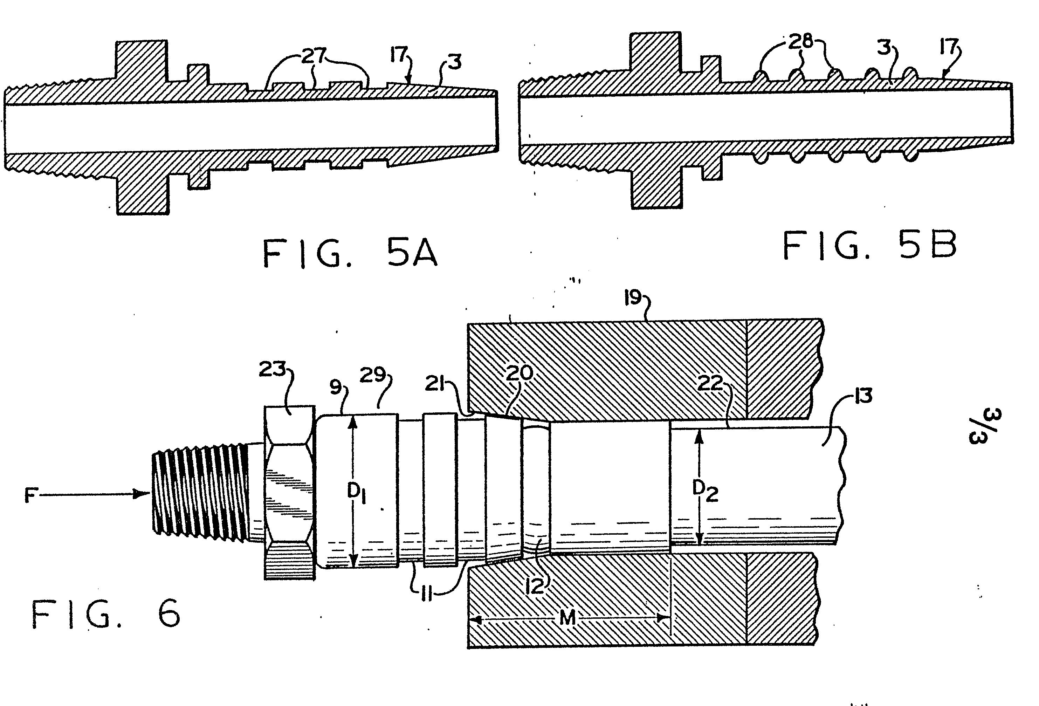

Although the embodiment of fitting 29 shown in FIGURE 1 has annular protuberances 6 in the form of ridges on the inner surface of wall 10 of shell 9 for enhancing the compressed engagement of fitting 29 with a hose or tube, the inner surface of wall 10 of shell 9 may be smooth or may have disruptions in the form of grooves, barbs or openings, or other types of protuberances or combinations thereof, such as for example as shown in FIGURE 4, where such isdesired for a particular application. Although nipple 17 shown in FIGURE 1 has a generally smooth outer surface, nipple 17 may have disruptions on the outer surface thereof such as serrations, grooves, barbs, threads, or the like, such as for example as shown in FIGURE 5, where such is desired for enhancing the compressed engagement of nipple 17 with the inner surface of the wall of the tubing or of the core tube of the hose to which fitting 29 is secured. Likewise, shell 9 is not limited to having been pressed into previously described groove 7 of body member 1 but may be secured to body member 1 in any manner suitable for the particular materials from which fitting 29 is made such as by threading, welding or brazing and the like and may be integral therewith where such is desired for a particular application. Previously described male pipe end 2 of fitting 29 is illustrative of only one of a number of means for connecting fitting 29 to a source of fluid that may be used in place of end 2 where such is desired.

Fitting 29 may be made from any materials suitable for a particular application such as steel, stainless steel, aluminum or brass alloys or plastic materials or the like provided that such materials are able to be contracted and lend themselves to the buckling characteristics of bridges 12 as hereinafter more fully described with respect to FIGURES 2 and 3.

FIGURE 2 shows the embodiment of fitting 29 of FIGURE 1 secured to the end of hose 13 as a result of shell 9 having been contracted inwardly a distance "X" to compress the wall of hose 13 between shell 9 and nipple 17 by a contraction process that imposes a longitudinal compressive force upon shell 9. Shell 9 has elongated a longitudinal distance "Y" as a result of shell 9 having contracted distance "X" which is less than the longitudinal distance shown as "Z" to which shell 9 would have normally elongated in the absence of the buckling of annular bridges 12.

FIGURE 3 shows an expanded view of shell 9 of FIGURE 2 in the region of annular bridges 12. During the process of contracting shell 9 towards nipple 17, bridges 12, as a result of the longitudinal compressive force associated with the contraction process, have buckled outwardly away from nipple 17 a distance illustratively shown as "L" in accordance with the invention such that the additive incremental effect of such buckling has reduced the elongation of shell 9 from the distance "Z" that would have occurred in the absence of bridges 12 to the distance "Y". As can readily be appreciated from FIGURE 3, not only has the buckling of bridges 12 provided for reduction in the elongation of shell 9 but in buckling outwardly portions of the wall of hose 13 have been able to expand outwardly into the space provided and thus has assumed a sinusoidal pattern along the length of the hose within the fitting so as to improve the compressed engagement therebetween.

Although it is preferred that bridges 12 be provided by disposing annular grooves 11 in the outer surface of wall 10 of shell 9 of fitting 29, bridges 12 may be provided by disposing annular grooves in the inner surface of wall 10 or by disposing grooves in both the inner and outer surface of wall 10 of which one or more may be substantially aligned provided that the bridges 12 provided thereby are adapted to buckle so as to cause a reduction to the elongation of shell 9. Although it is preferred that bridges 12 buckle outwardly away from nipple 17 in the manner previously described, the fitting of the invention includes embodiments of fitting 29 having bridges 12 that are adapted to buckle inwardly toward nipple 17 or both inwardly and outwardly where such is desired.

FIGURE 4 shows embodiments 4A, B and C of shell 9 prior to their securement into groove 7 of fitting 29. FIGURE 4A shows an embodiment where wall 10 of shell 9 has a single annular groove 11 in its outer surface that is substantially aligned with a single annular groove 11 in its inner surface where both grooves are adapted to provide annular bridges 12 in wall 10 therebetween that is caused to buckle in accordance with the invention. FIGURE 4B shows a single annular groove 11 in the outer surface of wall 10 of shell 9 that is adapted to provide annular bridge 12 of the invention thereacross. Also shown in FIGURE 4B are spaced-apart annular grooves 25 in the inner surface of wall 10 of shell 9. Grooves 25 are not adapted to provide an annular bridge 12 thereacross but rather are adapted to provide disruptions on the inner surface of wall 10. to enhance the gripping engagement of shell 9 with the outer surface of the hose or tubing to which fitting 29 of the invention is compressibly secured. FIGURE 4C shows another embodiment of shell 9 in which there are openings 26 through wall 10 of shell 9 that are adapted to receive a portion of the wall of the hose or tubing to which fitting 29 is comressibly secured. Shell 9 in FIGURE 4C has only a single groove 11 in the inner surface of wall 10 that is adapted to provide annular bridge 12 of the invention thereacross.

FIGURE 5 shows embodiments 5A and 5B of nipple 17 prior to the securement of shell 9 to fitting 29 of the invention. Wall 3 of the embodiment of nipple 17 shown in FIGURE 5A has annular grooves 27 in its outer surface for enhancing the gripping engagement of nipple 17 to the base of the tube or hose to which fitting 29 is compressibly secured. Wall 3 of the embodiment of nipple 17 shown in FIGURE 5B has annular barbs 28 extending from the outer surface of wall 3 for enhancing
the gripping engagement of nipple 17 to the inner
surface of the base of the tube or hose to which fitting
29 is compressibly secured.

FIGURE 6 shows the embodiment of fitting 29
shown in FIGURES 1, 2 and 3 partially secured to the end
of hose 13 by a typical swaging process that comprises
pressing fitting 29 by means of force "F" longitudinally
through die 19 after hose 13 has been inserted into
fitting 29 in the manner previously described. Die 19
is made from a material that is able to suitably
withstand the forces generated during the swaging
process. Die 19 has a substantially circular shaped
opening 21 at the entrance end thereof that is slightly
larger in diameter than diameter $D_1$ of shell 9.
Opening 21 coaxially communicates with substantially
tubular shaped bore 22 through die 19 having a diameter
"$D_2$" by means of transition zone 20 that tapers
radially inwardly between opening 21 and bore 22. The
swaging operation shown in FIGURE 6 is incomplete for
illustrative purposes in that fitting 29 has only been
partially pressed a distance "M" into die 19. Generally
fitting 29 is pressed through die 19 to contract
diameter "$D_1$" of shell 9 to diameter "$D_2$" for a
distance previously determined as suitable for securing
fitting 29 to hose 13. As fitting 29 is pressed into
die 19, die 19 exerts a longitudinal force in a
direction opposite to force "F" giving rise to an
opposite longitudinal compressive force that causes
annular bridge 12 closest to the die to buckle in the manner previously described. As fitting 29 is pressed further into die 19, the remaining bridges 12 formed by grooves 11 are likewise caused to buckle with the all over result being a reduction of the length of shell 9 over what it would have been had groove 11 been absent therefrom. It has been found that a swaging operation is particularly prone to impose longitudinal shear stresses and stretch on the core tube wall of a hose or tubing within a fitting due to the fact that a region of shell 9 of fitting 29 closest to die 19 is first secured to the hose or tubing and when the remaining portion of shell 9 is pressed through die 19, shell 9 is contracted both inwardly and is pressed longitudinally away from the region of securement towards entrance opening 21 of die 19 so as to contribute to the elongation of shell 9 and the longitudinal shear stress and stretch imposed upon the hose or tube wall contained within fitting 29 as a result of the compressed engagement therebetween.

An example of a fitting shell before contraction is made in accordance with the invention is described in following Table I.

## TABLE I

| Fitting Material | Steel |
|---|---|
| Shell Length | 2.68 Inches |
| Shell Wall Thickness | 1/4 Inch |
| No. of External spaced apart grooves in outer surface of shell wall | 3 |

| | |
|---|---|
| Depth of external grooves | .020 Inch |
| Width of external grooves | .22 Inch |
| No. of grooves in inner surface of shell wall substantially aligned with outer grooves | 3 |
| Depth of internal grooves | .142 Inch |
| Width of Internal grooves | .22 Inch |
| Resultant bridge width between inner and outer grooves | .22 Inch |
| Bridge thickness | .0675 Inch |

When the shell of the fitting of Table I was swaged on to the end of a reinforced hose from an initial shell outer diameter of 2.340 inches to a contracted shell outer diameter of 2.065 inches, the shell was found to have elongated approximately .052 inches. Such elongation is a substantial reduction of the shell elongation of approximately .160 inches found when an equivalent fitting having an equivalent shell only absent the grooves and resultant bridges therein was swaged onto the end of the same hose. In addition to the reduced shell elongation associated with the shell of the fitting of Table 1, examination revealed that the wall of the core tube of the hose within the fitting of the invention was not broken whereas the core tube of the hose secured to the equivalent fitting not having the shell bridges was completely broken in half circumferentially within the fitting.

WHAT IS CLAIMED IS:

1. A permanently attachable fitting adapted to be compressibly secured to the end of a hose or tubing for use in the conveyance of fluids therethrough and to reduce the amount of longitudinal shear stresses and stretch imposed thereupon within the fitting during the securement process, said hose or tubing having an annular wall having a bore extending therethrough, and said fitting comprising;

a body member having means extending from one end thereof for attaching the body member to a source of fluid and having a substantially tubular shaped nipple member extending from the opposite end thereof that is adapted to be inserted into the bore of the hose or tubing, said nipple, body member and attachment means having bores extending therethrough that are adapted to provide a fluid communicating relationship between the fluid source and the hose bore,

a compressible shell member extending from the body member coaxially about the nipple and having a wall thereof that encloses the nipple with the inner surface thereof spaced apart from the outer surface of the nipple to provide an annular cavity therebetween that is adapted to receive the wall of the hose or tubing,

one or more spaced apart annular grooves disposed in the wall of the shell member, each of said grooves adapted to provide an annular bridge in the wall of the shell member thereacross that is adapted to buckle in such a manner as to reduce the elongation of the shell member when the shell member is contracted towards the nipple to compressibly secure the wall of the hose or tubing therebetween by a contraction process that imposes a longitudinal compressive force upon the shell member sufficient to cause said buckle so as to reduce the elongation of the shell and thereby reduce relative longitudinal movement between the shell and the nipple members during the securement process so as to reduce longitudinal shear stresses and stretch imposed upon the wall of the hose or tubing within the fitting arising from the compressed engagement thereof with both the nipple and shell member.

2. The fitting of Claim 1 wherein the grooves are disposed in the outer surface of the shell member wall.

3. The fitting of Claim 1 wherein the grooves are disposed in the inner surface of the shell member wall.

4. The fitting of Claim 1 wherein the grooves are disposed in both the inner and outer surface of the shell member wall.

5. The fitting of Claim 1 including disruptions disposed in the inner surface of the shell member wall in such a manner as to enhance the compressed engagement between the hose or tubing wall and the shell member.

6. The fitting of Claims 1 or 5 including disruptions disposed in the outer surface of the nipple member in such a manner as to enhance the compressed engagement between the hose or tubing and the nipple member.

7. The fitting of Claim 5 wherein the disruptions are in the form of one or more annular grooves disposed in the inner surface of the shell member wall.

8. The fitting of Claim 5 wherein the disruptions are in the form of protuberances that extend inwardly from the inner surface of the shell member wall towards the nipple member.

9. The fitting of Claim 5 wherein the disruptions are in the form of openings disposed through the shell member wall that are adapted to receive a portion of the hose wall during the securement process.

10. The fitting of Claim 6 wherein the disruptions are in the form of annular grooves in the outer surface of the nipple member.

11. The fitting of Claim 6 wherein the disruptions are in the form of protuberances extending from the outer surface of the nipple member towards the shell member.

12. The fitting of Claim 6 wherein the protuberances are in the form of annular barbs.

- 18 -

13. The fitting of Claim 4 wherein at least one of the grooves in the inner surface of the shell member wall is substantially aligned with one of the grooves in the outer surface of the shell member wall such that the bridge comprises the wall of the shell member separating said inner groove from said outer groove.

FIG. 1

FIG. 2

0057920

2/3

FIG. 3

FIG. 4A

FIG. 4B

FIG. 4C

FIG. 5A

FIG. 5B

FIG. 6

3/3

0057920

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | AT - B - 335 806 (PNEUMATIQUES, CAOUTCHOUC MANUFACTURE ET PLASTIQUES KLEBER COLOMBES) <br> * Fig. 1-8 * <br> & GB-A-1 467 066 <br> -- | 1,3,5, 7,11 | F 16 L 33/20 |
| Y | DE - A1 - 2 332 528 (CONTINENTAL GUMMIWERKE AG) <br> * Totality * <br> -- | 1,3,5 | |
| A | EP - A1 - 0 018 195 (EATON CORPORATION) <br> * Fig. 1-5 * <br> -- | 1,9 | TECHNICAL FIELDS SEARCHED (Int.Cl. 3) <br><br> F 16 L 33/00 |
| X | US - A - 4 106 526 (SZENTMIHALY) <br> * Totality * <br> -- | 1,2,3, 4,5,6, 7,8,10, 11,12 | |
| X | AU - B1 - 35 194/78 (FREDERICK DUFFIELD) <br> * Totality * <br> -- | 1-8, 10,11, 12 | |
| Y | GB - A - 992 378 (STRATOFLEX INC.) <br> * Fig. 2-4 * <br> ---- | 1,3,5, 7,11 | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search <br> VIENNA | Date of completion of the search <br> 24-04-1982 | Examiner <br> SCHUGANICH | |